(19) **Europäisches Patentamt / European Patent Office / Office européen des brevets**

(11) **EP 1 854 235 B1**

(12) **EUROPEAN PATENT SPECIFICATION**

(45) Date of publication and mention of the grant of the patent:
**09.04.2014 Bulletin 2014/15**

(21) Application number: **05711087.6**

(22) Date of filing: **17.02.2005**

(51) Int Cl.:
**H04L 1/06** $^{(2006.01)}$    **H04B 7/15** $^{(2006.01)}$

(86) International application number:
**PCT/SE2005/000227**

(87) International publication number:
**WO 2006/088400 (24.08.2006 Gazette 2006/34)**

(54) **METHOD AND ARRANGEMENT FOR COOPERATIVE RELAYING**

VERFAHREN UND ANORDNUNG ZUR KOOPERATIVEN WEITERLEITUNG

PROCEDE ET DISPOSITIF POUR SYSTEME DE RELAIS COOPERATIF

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**14.11.2007 Bulletin 2007/46**

(73) Proprietor: **Telefonaktiebolaget LM Ericsson (publ)**
**164 83 Stockholm (SE)**

(72) Inventors:
• **LARSSON, Peter**
  **S-169 71 Solna (SE)**
• **HU, Rong**
  **Hangzhou 310000 (CN)**
• **ZHANG, Zhang**
  **Beijing 100004 (CN)**

(74) Representative: **Stenborg, Anders Vilhelm et al**
**Aros Patent AB**
**P.O. Box 1544**
**751 45 Uppsala (SE)**

(56) References cited:
WO-A1-2004/040833    WO-A1-2004/102891
WO-A2-2005/011178    US-A1- 2003 013 468
US-A1- 2003 124 976    US-A1- 2004 208 258

US-A1- 2004 266 339

• DATABASE INSPEC [Online] ZHANG J. ET AL.: 'Optimal power allocation for multiple-input-multiple-output relaying system', XP003016386 Database accession no. (8436425) & IEEE 60TH VEHICULAR TECHNOLOGY CONFERENCE, 2004 VTC2004-FALL, 2004 vol. 2, 26 September 2004 - 29 September 2004, pages 1405 - 1409
• PICKHOLTZ R L ET AL: "Information Efficiency of Multihop Packet Radio Networks With Channel-Adaptive Routing", IEEE JOURNAL ON SELECTED AREAS IN COMMUNICATIONS, IEEE SERVICE CENTER, PISCATAWAY, US, vol. 23, no. 1, 1 January 2005 (2005-01-01), pages 40-50, XP011124220, ISSN: 0733-8716, DOI: 10.1109/JSAC.2004.837366
• HARMERSTRIOM I ET AL: "Cooperative diversity by relay phase rotations in block fading environments", SIGNAL PROCESSING ADVANCES IN WIRELESS COMMUNICATIONS, 2004 IEEE 5TH W ORKSHOP ON LISBON, PORTUGAL 11-14 JULY 2004, PISCATAWAY, NJ, USA,IEEE, 11 July 2004 (2004-07-11), pages 293-297, XP010806871, DOI: 10.1109/SPAWC. 2004.1439251 ISBN: 978-0-7803-8337-1
• SOURYAL M R ET AL: "Cooperative turbo coding with time-varying rayleigh fading channels", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 1, 20 June 2004 (2004-06-20), pages 356-360, XP010710374, DOI: 10.1109/ICC.2004.1312510 ISBN: 978-0-7803-8533-7

**Description**

TECHNICAL FIELD

The present invention relates to communication systems in general, specifically to relaying deployment in such systems.

BACKGROUND

Future wireless and/or cellular systems are expected to either require increased coverage, support higher data rates or a combination of both. In addition, the cost aspect of building and maintaining the system is expected to become of greater importance in the future. As data rates and/or communication distances are increased, the problem of increased battery consumption also needs to be addressed.

One aspect is rethinking the topology used in existing systems, as there has been little change of topology over the three generations of cellular networks. For instance, it is well known that multihopping, being an example of another communication topology, offers possibilities of significantly reduced path loss between communicating (relay) entities, which may benefit the user. In the following, another type of topology will be discussed that considers two-hop relaying combined with aspects of advanced antenna systems. This is a research area, yet in its infancy, that employs cooperation among multiple stations as a common denominator. In recent research literature, it goes under several names, such as cooperative diversity, cooperative coding, virtual antenna arrays, etc. A good general overview over cooperative communication schemes is given in [1]. The general benefits of cooperation between stations in wireless communication can be summarized as higher data rates, reduced outage (due to some forms of diversity), increased battery life and extended coverage (e.g. for cellular systems).

First, the area of advanced antennas is discussed, and subsequently, the state of the art with respect to cooperative relaying is considered.

Advanced antennas and spatial coding: Methods to enhance system performance in a cellular communication system is a very active research area. One such method is to employ multiple antennas at the base stations (*BSs*), and thereby provide valuable diversity gains that mitigate any channel fluctuations imposed by fading. In downlink, (from BS to a mobile station (*MS*)) so called transmit diversity can be employed and in uplink, (from MS to BS) receiver diversity can be used. Of course, the MS may also be equipped with multiple antennas, but a MS is generally space limited (which inherently limits the number of antennas at the MS) and therefore the BS solution is often to prefer. Many well known schemes exist both for receiver and transmitter diversity. For receiver diversity, selection diversity, maximum ratio combining or interference rejection combining may be used. For the newer transmit diversity area, possible options include delay diversity, Alamouti diversity, coherent combining based diversity.

Transmit diversity, in particular Alamouti diversity, belongs to a class of coding schemes that are often denoted space-time coding (*STC*). In STC schemes, it is generally assumed that the transmitter is equipped with multiple antennas while the receiver has only one or alternatively multiple antennas. Transmitted signals are then encoded over the multiple transmit antennas and sometimes also in time domain. With multiple antennas at both transmitter and receiver side, the channel is often denoted a Multiple Input Multiple Output channel (*MIMO*). A MIMO channel can be used mainly for two reasons, either for diversity enhancements, i.e. providing a more robust channel under channel fluctuations, or for so called spatial multiplexing, i.e. providing a set of parallel and multiplexed MIMO sub channels. The benefit of spatial multiplexing is that extremely high spectrum efficiency is achievable. A background on MIMO communication is given in [2]. Repeaters: Another well-known method for enhancing system performance is to deploy repeaters in areas where coverage is poor. The basic operation for the repeater is to receive a radio signal, amplify it, and retransmit it. Repeaters may use the same frequency for reception and transmission, or optionally shift the transmit frequency for increased output-input isolation avoiding risk for feedback and oscillations.

Cooperative Replaying: (a.k.a. Virtual antenna arrays) Traditionally, the previously mentioned repeaters are fairly unintelligent. However, more recently, the idea of cooperative relaying with smarter repeaters (or relays) has received some interest. The idea is that relays can cooperate in forwarding a signal from a transmitter to a receiver or multiple receivers [3]. The cooperation may for instance involve aspects of coherent combining, STC (e.g. Alamouti diversity), and be of regenerative (decode and forward data) or non-regenerative (amplify and forward data) nature. The number of hops is (generally) limited to two hops, i.e. one hop to the relay station(s), and one hop to the receiving station.

One special and interesting type of cooperative relaying (or virtual antenna arrays) is when MIMO is exploited. This has been studied extensively by Dohler et al., e.g. in [4], [5] and [6].

Dohler's scheme, according to prior art, is founded on that a superposition of multiple sub stream signals is transmitted to the receiver from the relays over multiple channels, but this is not an optimum solution in the sense that higher throughput could be achieved given the invested power (or energy). Also, the aspect on how to select relays is left fully un-addressed. Moreover, the aspect on how to assign power among different relays in an efficient way has not been addressed in Dohler's scheme, i.e. all involved relays have the equal power [5], [6].

The article "Optimal Power Allocation for Multiple-Input-Multiple-Output Relaying system" (Zhang J. et al.; & IEEE 60th Vehicular Technology Conference, 2004 VTC 2004-FALL, 2004, Vol. 2, 26 September 2004 (2004-09-26), -29 September 2004 (2004-09-29), Pages 1405-1409) relates to a cooperative relaying system model based on MIMO technology, and power allocation in that system model.

SUMMARY

An object of the present invention is to provide an improved relaying scheme in a communication system.

A specific object is to enable improved cooperative relaying in a communication system.

A specific object is to enable a method for spatial multiplexing with improved spectrum efficiency.

Another specific object is to enable a method for allocating power between a transmitter and relays with decreased power consumption.

Yet another specific object is to enable a method for allocating power between a transmitter and relays to reduce the generated interference.

Another specific object is to enable cooperative relaying with increased overall system capacity.

These and other objects are achieved with a method according to claim 1 and a communication system according to claim 19. Preferred embodiments are set out in the dependent claims.

Briefly, the present invention comprises partitioning a data stream into a plurality of data substreams, beamforming each respective data substream to a respective relay, and forwarding the data substreams orthogonally to a receiving unit.

More specifically, the invention comprises enabling feedback of channel state information, whereby the transmit power and/or the bit rate for each data substream can be adjusted to provide optimal transmission of information content.

Advantages of the present invention include:

- High spectrum efficiency.
- Decreased power consumption due to efficient power allocation between the transmitter and relays.
- Reduced generation of interference due to efficient power allocation between the transmitter and relays.
- Increased overall system capacity.

BRIEF DESCRIPTION OF THE DRAWINGS

The invention, together with further objects and advantages thereof, may best be understood by making reference to the following description taken together with the accompanying drawings, in which:

Fig. 1 is a schematic illustration of a system according to the invention;
Fig. 2 is a schematic flow diagram of an embodiment of a method according to the invention;
Fig. 3 is a schematic illustration of part of a specific embodiment of the invention;
Fig. 4 is a schematic illustration of another specific embodiment of a method according to the invention;
Fig. 5 is a schematic illustration of another specific embodiment of a method according to the invention;
Fig. 6 is a schematic illustration of an embodiment of a system according to the invention;
Fig. 7 is a diagram illustrating benefits of the invention when compared to prior art.
Fig. 8 is a schematic illustration of spatial distribution of relay nodes according to the invention;
Fig. 9 is a schematic illustration of another spatial distribution of relay nodes according to the invention;

DETAILED DESCRIPTION

Frequently used abbreviations are according to the following:

BS      Base Station
CSI      Channel State Information
MAI      Multiple Access Interference
MS      Mobile Station
MIMO      Multiple Input Multiple Output
SNR      Signal-to-Noise Ratio
STC      Space-Time Coding

The present invention addresses a special relay architecture that is related to cooperative relaying, also referred to as virtual antenna arrays, cooperative diversity etc. [1]. In a sense, cooperative relaying may be viewed as a degenerated case of multi-hopping involving only two hops, but at the same time generalized to and allowing for parallel paths as well as signal processing to be exploited. In addition, cooperative relaying may exploit various forms of relayed information such as basic repeater (non-regenerative) functionality or "decode and forwarding" (regenerative) as done traditionally in multi-hop networks.

The basic idea of the present invention is that a transmitter, being equipped with multiple antennas and having multiple MIMO-substreams, beamforms one or more MIMO-substreams to each of a plurality of relay nodes, and each relay node is capable of decoding the substream prior to forwarding detected data to a receiver node over a channel being substantially orthogonal with respect to other relay channels. This is made possible by adapting the transmitters' antenna weight matrix to the channels of the different relays.

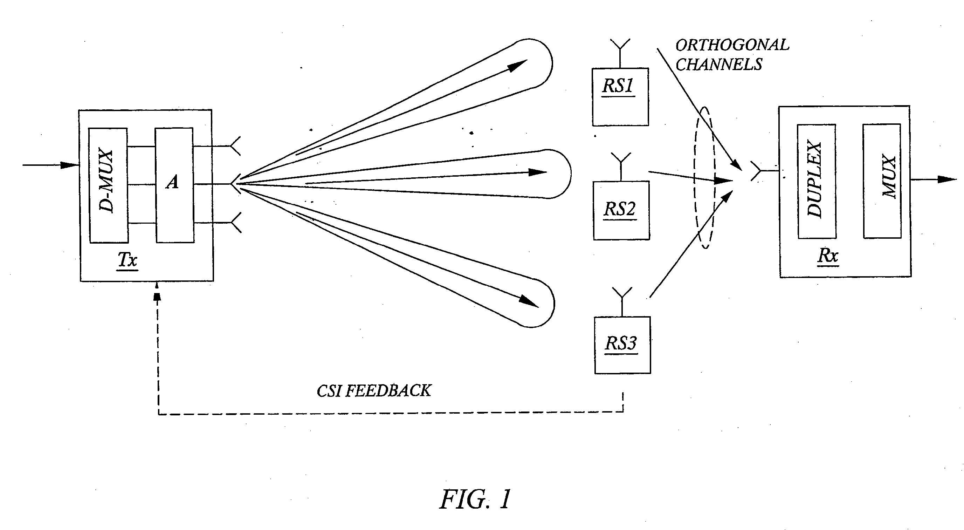

A basic embodiment of a method according to the present invention will be described with reference to the system of Fig.1. The model system comprises a transmitting node Tx equipped with multiple antennas, three relay nodes RS1, RS2, RS3, and a receiving node Rx. In this general embodiment, the relay nodes and the receiver each have one antenna; however, the invention is not limited to this general embodiment.

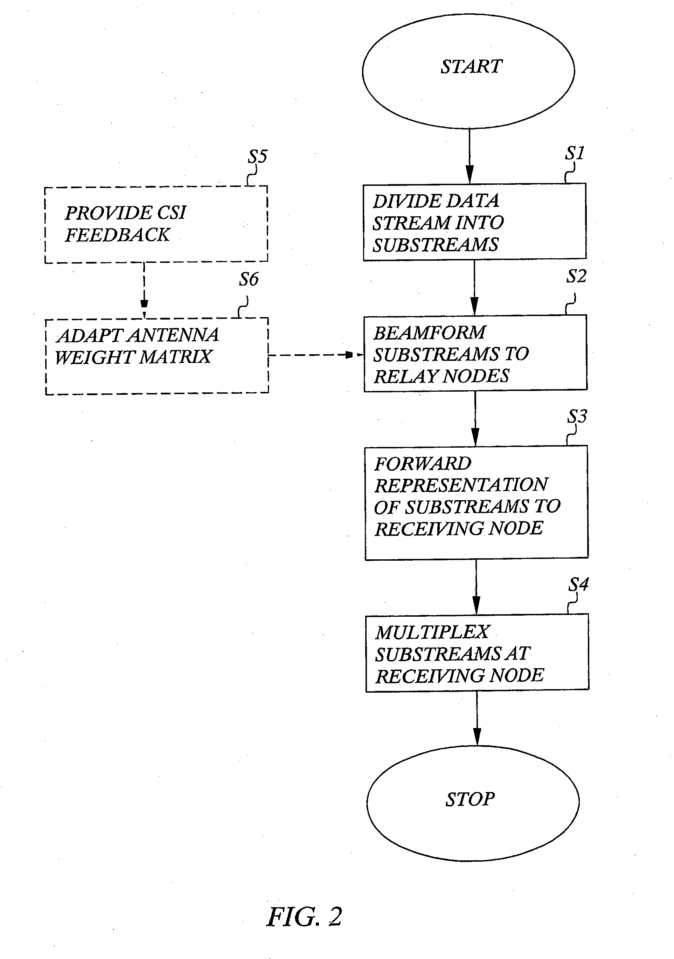

With reference to Fig. 1. and Fig. 2, at some point in time, the transmitter Tx receives a data stream or signal for transmission to the receiver Rx. The data stream is divided or partitioned S1 into a number of data substreams, which are then beamformed and transmitted S2 to at least two relay nodes.

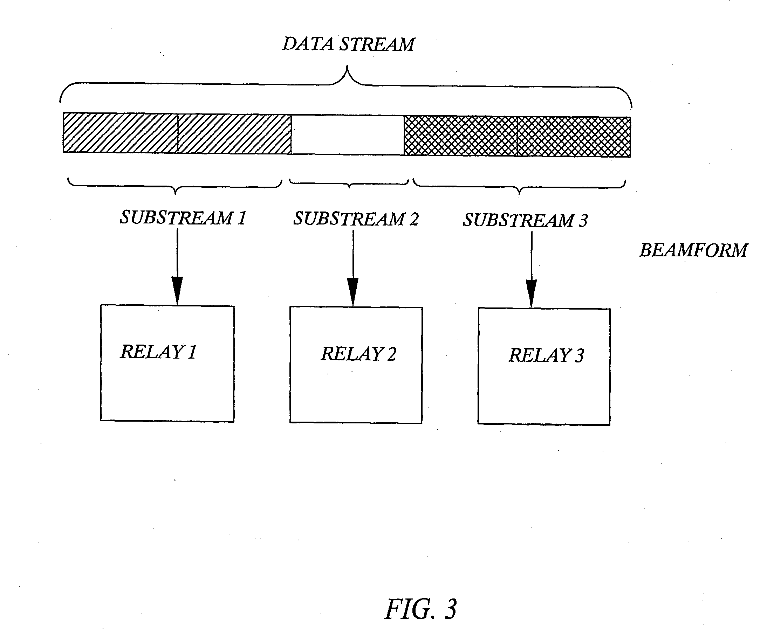

The principle of partitioning the data stream and transmitting each data substream to a respective relay is illustrated in Fig. 3. Accordingly, the data stream is divided (also known as de-multiplexed) into three substreams, each of which is transmitted to a respective relay node. In Fig. 1 there are illustrated three data substreams beamformed one to each respective relay node.

Subsequently, the relay nodes each forwards S3 a restorable or decodable or loss-free representation of the received data substream to the receiving node, which receives and combines or multiplexes S4 the received representations into an output signal corresponding to the data stream originating at the transmitting node.

According to the invention, the data substreams are transmitted to a respective relay (or a respective antenna of a relay, or alternatively to a group of antennas with post-processing that separates the multiple data streams, if the relay has multiple antennas), whereby different parts of the signal travel parallel but different paths in the network. Consequently, what the receiver receives is a plurality of representations of the different substreams of the original signal. Combining the substreams, through individual substream demodulation with subsequent multiplexing of the substreams, is a fairly simple operation, distinctly different from prior art [3]-[6] where the receiver has to jointly decode a plurality of signals, each of which is a superposition of the original signals (corresponding to the substreams).

According to a specific embodiment of the method according to the invention, with reference to Fig. 2, the respective relay nodes provide channel state information S5 to the transmitter node. The channel state information comprises information regarding at least one of the first and the second link. Based on the received channel state information the transmitter adjusts its weighting matrix.

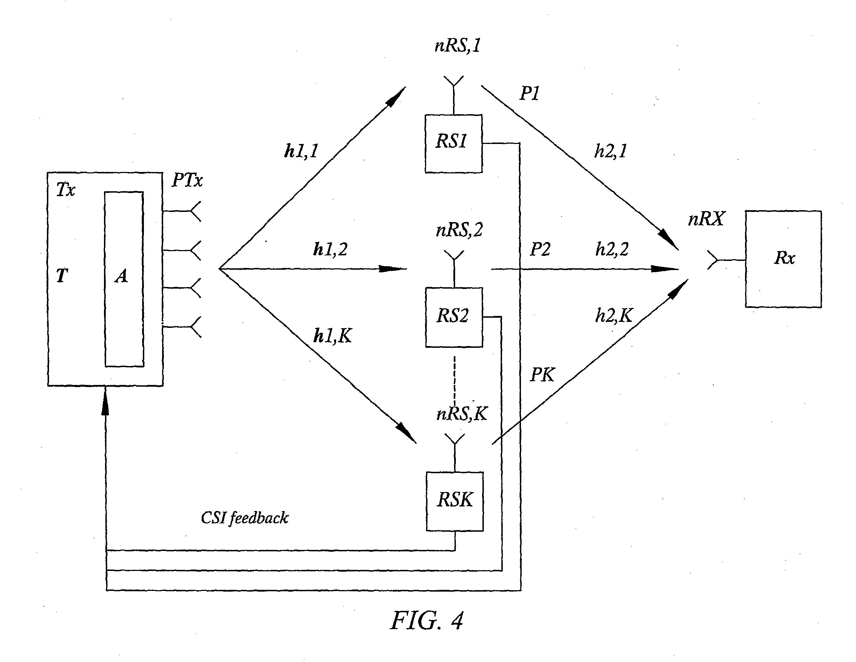

A specific embodiment of the invention will be described with reference to the system illustrated in Fig. 4. The system comprises a transmitting node Tx equipped with a plurality of antennas, a plurality of relay nodes RS1, RS2...RSK, and a receiving unit Rx

According to the embodiment, the receiver Rx and each relay RS1, RS2...RSK are each equipped with one single antenna. However, it is equally possible for the receiver and the relays to have multiple antennas as will be described with reference to another specific embodiment.

The transmitter node Tx sends a data stream, converted into parallel modulated and encoded substreams T, through a weighting matrix A. The task of the matrix A is to ensure that data substreams sent to respective relay node over the first link is possible to decode. When the relay node receives the substream, it is decoded, amplified and forwarded to the receiver node, i.e. regenerative relaying. However, the concept in this invention is not limited to the regenerative relaying; it could also be extended to e.g. non-regenerative relaying, wherein each substream is adapted to have a sufficient quality to be decodable or restorable at the receiver. Since different substreams are forwarded, those are sent over orthogonal channels over the second link. The channelization may e.g. be in the frequency, code or time domain. The matrix A is determined through (logical) feedback from the relays as indicated in Fig. 4. Various well-known beamforming weighting schemes can be used to determine A.

In the following, the basic idea of the invention is complemented with a power control scheme. For this purpose, a derivation of performance is performed, and used as guidance when designing the power control scheme. In addition, the invention is also complemented with rules for selecting relay nodes as a secondary outcome of this derivation. The derivation follows below:

The received signal $\mathbf{R}^{(RS)}$ at the relay nodes is according to the embodiment.

$$R^{(RS)} = H \cdot A \cdot T + N^{(RS)}$$

where T is the signal to be transmitted, A is the transmit weight matrix, H is the channel matrix for the first link, N is the complex Gaussian noise vector at the relay nodes with variance $\sigma_{lk}^2$. The noise term can also include interference terms that are modeled as complex Gaussian random variables. Note that although this is written in matrix-vector form, it is not possible for each relay node to observe the full receive vector. The total available bandwidth is here divided into (k+1) parts where k is the number of relay nodes.

The channel matrix H may be decomposed in average amplitude path gain matrix, A, and a Rayleigh fading matrix according to

$$H = A \cdot X$$

where $A = diag\left\{\sqrt{G_{11}}, \sqrt{G_{12}}, ..., \sqrt{G_{1k}}\right\}$ and the elements in X are assumed (i.e. for simplicity here in the derivation) to be complex Gaussian random variables with variance one.

We select the weighting matrix W based on zero-forcing, as

$$W = X^{-1}$$

This choice is not necessarily optimum, and not even always possible depending on the invertability of the realization of matrix X, but it is an asymptotically acceptable approximation when the number of transmit antennas at the transmitter is large.

Also note that one may, instead alternatively use a QR-decomposition approach at the transmitter for sending different signals to different relays, e.g. according to [7]. Another version that could potentially be used is **W = X\***, but it results in interference leakage between the substreams, and hence the each substream rate needs to be adapted to the given signal to interference ratio. Other schemes resulting in acceptable leakage between the MISO transmissions can also be used and the invention is not generally limited to the any specific weight matrix method, such as the **W = X⁻¹** scheme, to achieve substantially orthogonal substreams at the relays.

The resulting received signal is then

$$R^{(RS)} = A \cdot X \cdot X^{-1} \cdot T + N^{(RS)}$$
$$= A \cdot T + N^{(RS)}$$

This means that the SNR at each relay is (well approximated with)

$$\Gamma_{1k} = \frac{G_{1k}P_{1k}}{\sigma_{1k}^2}$$

where $P_{1k}$ is the average power relates to X and T as

$$P_{1k} = E\left\{\left|\mathbf{X}^{-1} \cdot \mathbf{T}\right|^2\right\}_{kk}$$

(We are going to determine $P_{1k}$, which then can be used to determine variance of the element in T. However, if we assume large number of antennas (and relays), then $E\{|X^{-1}|^2\}_{kk} \approx$ constant, so the radiated power for a substream also relate fairly well to the amount of power before the weighting matrix W. If **X** happens to be a unitary matrix (which it generally isn't), then the radiated power $P_{1k}$ is exactly proportional to the power for element k in T)

The SNR at the receiver is

$$\Gamma_{2k} = \frac{G_{2k}P_{2k}}{\sigma_{2k}^2}$$

where $G_{2k}$ is the path gain from the k:th relay to the receiver, $P_{2k}$ is the transmit power at the k:th relay, $\sigma_{2k}^2$ is the noise power at the k:th receive channel at the receiver.

We now want to optimize the aggregate Shannon capacity over the k relays.

First, we argue that the rates must be identical for the first and second link of the k:th relay, i.e.

$$\Gamma_{1k} = \Gamma_{2k} \Rightarrow \frac{G_{1k}P_{1k}}{\sigma_{1k}^2} = \frac{G_{2k}P_{2k}}{\sigma_{2k}^2} \Rightarrow P_{2k} = P_{1k}\frac{G_{1k}\sigma_{2k}^2}{G_{2k}\sigma_{1k}^2}$$

The reason for equal rates is that what is received by a relay must be possible to send. If the rates are unequal, too much information may be received over the first link, or the second link may overprovision capacity and hence waste valuable power resources.

The total capacity (in b/Hz/s) is then

$$C^{(tot)} = \frac{B}{K+1}\sum_{k=1}^{K}\lg_2\left(1+\Gamma_{1k}\right)$$

$$= \frac{B}{K+1}\sum_{k=1}^{K}\lg_2\left(1+\frac{G_{1k}P_{1k}}{\sigma_{1k}^2}\right)$$

The capacity shall be maximized under an aggregate power constraint including both transmitter and relays. This is required since there is a rate relation between the first and second link for each relay. The total power is $P_{tot}$ and can be written as:

$$P_{tot} = \sum_{k=1}^{K} \left( P_{1k} + P_{2k} \right)$$

$$= \sum_{k=1}^{K} P_{1k} \left( 1 + \frac{G_{1k}\sigma_{2k}^2}{G_{2k}\sigma_{1k}^2} \right)$$

$$= \sum_{k=1}^{K} P_{1k} c_{1k}$$

Substitute with a (help variable), i.e. the power *term* $\rho_{1k} = P_{1k}c_{1k}$ which gives

$$C^{(tot)} = \frac{B}{K+1} \sum_{k=1}^{K} \lg_2 \left( 1 + \frac{G_{1k}\rho_{1k}}{\sigma_{1k}^2 c_{1k}} \right)$$

$$= \frac{B}{K+1} \sum_{k=1}^{K} \lg_2 \left( 1 + \rho_{1k} \frac{G_{1k}G_{2k}}{\left( G_{2k}\sigma_{1k}^2 + G_{1k}\sigma_{2k}^2 \right)} \right)$$

$$= \frac{B}{K+1} \sum_{k=1}^{K} \lg_2 \left( 1 + \frac{\rho_{1k}}{\widetilde{N}_k} \right)$$

With an equivalent noise of

$$\widetilde{N}_k = \frac{G_{2k}\sigma_{1k}^2 + G_{1k}\sigma_{2k}^2}{G_{1k}G_{2k}}$$

and with the equivalent power constraint

$$P_{tot} = \sum_{k=1}^{K} \rho_{1k}$$

This problem formulation indicates that the problem falls back to the classical water-filling problem of parallel Gaussian noise channels, i.e. that this tells us to assign most power to the relay paths having the least equivalent noise. As in the classical water-filling problem, it may also occur that the total power is not assigned to all relays, i.e. one or more of the relays having the worst equivalent noise are not used. Since the equivalent noise will differ between the relays, each relay path will support different data rates. If the rates differ, and the transmit durations are fixed, then the amount of information sent over each relay path will differ. Hence, the transmitter may take a higher layer packet and split in smaller packets of different lengths and send those over the different relay paths.

While the power allocation procedure and performance above was derived for a fixed bandwidth, split in K+1 parts, another assumption could be that one from practical viewpoint has near infinite (or at least very large) bandwidth to use for the second link. This assumption could be used for instance if the second link operates on a very high frequency, where bands are often assigned a large fraction of spectrum. By way of example, this is the case of unlicensed spectrum bands at 5.8 GHz, 24 GHz and 60 GHz. The benefit of this is that the K+1 normalization factor in the channel capacity disappears and offers significant increased capacity. This assumption, can be motivated by that the high frequencies band are suitable for short range operation, due to their inherent high path loss, while less suitable for the first link that preferably opts for long range operation.

A coarse relay selection procedure orders all relays in increasing equivalent noise. A subset (out of all relays) containing k relays having the least equivalent noise is then selected. Power and rates are then determined according to equations above. One may stop after this or proceed iteratively until the optimum set of relay nodes is found.

One aspect that needs to be contemplated over is the SNR influence on the number of relays. Assume we start with k relays, and find that a subset of nodes is not allocated any power. If we remove those nodes, then the amount of BW for each relay can be increased, and consequently the SNR will be modified. With this modified SNR, one may anew examine the equivalent noise and allocate power by water filling. This process can be made iteratively to find the optimum number of relays, either by removing the worst station at each step or using a divide and conquer approach.

This procedure could be executed in the sender (e.g. a basestation) with knowledge of the path gains from the BS to the relays and from the relays to the receiver (e.g. a MS)

A particular embodiment according to the invention involves (logical) feedback of *channel state information* (CSI) from each of the relay nodes back to the transmitter node. The feedback may however take another path, e.g. via the receiver node, or the relay's CSIs may be estimated by the receiver. The feedback provides information regarding the channel state between the relay node and the receiver node. Consequently, the transmitter node can, based on the feedback, adjust the transmit power and/or the bit rate of each substream in order to optimize the transmitted information content. Furthermore, the feedback can be utilized in order to balance the power and/or bit rate between the two links i.e. between the transmitter node and the relay node, and between the relay node and the receiver node.

Channel state information (CSI) is typically assumed to be complex amplitude gain factors, denoted h for scalar values, h for vectors, H for matrixes. For the case of beamforming, phase information is necessary. However, for the second link between a relay node and a receiving node the magnitude of the amplitude gain i.e. $|h|$ is more relevant. For the same link it is also possible to use the channel gain g, i.e. $g=|h|^2$. In other words, it is possible to utilize the full CSI at the transmitter, but for this particular case, it is possible to cope on less information for the second link. However, for the case with multiple antennas for at least one of the plurality of relay nodes or the receiver node, the phase is of importance and the full CSI information including the phase information is necessary.

According to another specific embodiment of the invention, the transmitter node and relay nodes allocate power such that the channel capacities, i.e. the SNRs, are similar or identical on the first and second link for each relay node. Possibly, the total power of the transmitter node and the relay nodes can be managed together (e.g. with an aggregate power constraint for both transmitter node antennas and relay nodes) to maximize the joint channel throughput. The control loop primarily includes sending CSI information from the relay nodes to the transmitter node. If the transmitter node is a BS, the links may be fairly stable and allow for fairly slow feedback rate.

Moreover, the quality at the receiver is preferably also involved in a feedback loop. Hence, both the relay and transmitter power, and transmitter transmit weight matrix is adapted when channels change. In addition, the data rates (in conjunction with power allocation) can be assigned for each parallel substream in accordance with the links characteristics, such that overall throughput is maximized. Apart from the shown functions, additional supporting functions exist in the network, e.g. support for mobile receiver, ensuring that "optimal" relays are selected as a receiver is moving. Hence, additional control paths exist to handle additional functions.

According to another specific embodiment of a method of the present invention, the CSI is further utilized in order to select a more or less optimal sub group of the plurality of relay nodes. This can be performed based on maximizing some criteria, e.g. an expected throughput for the system. The substreams can thereafter be beamformed to the selected sub group of relay nodes.

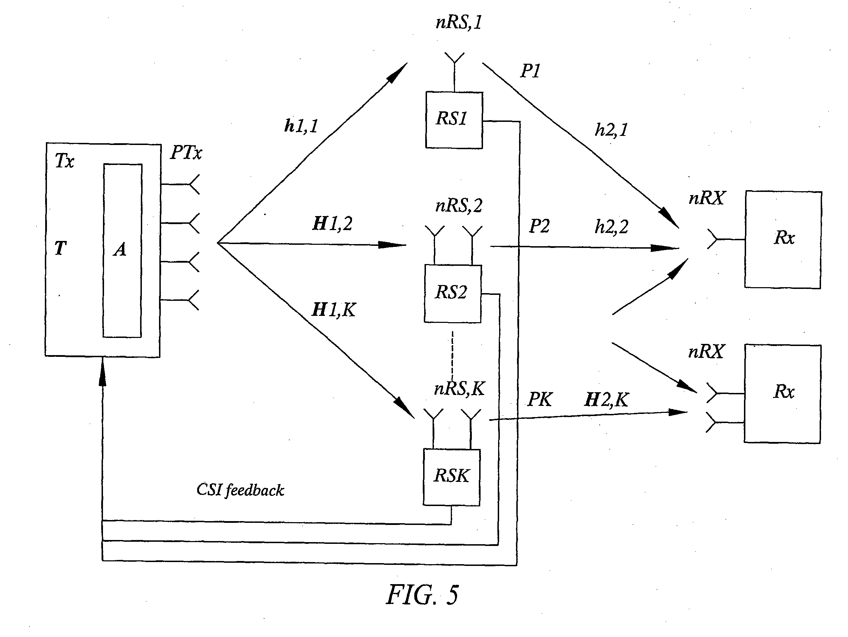

In Fig. 5, the system architecture shown in Fig. 4, has been generalized to comprise relay nodes RS1, RS, ..., RSK with multiple antennas, multiple receiver nodes Rx, and receiver nodes comprising multiple antennas. The previously described embodiments can be applied to this specific system.

For the situation that a relaying node comprises multiple antennas, the relaying node can be adapted to function according to the following:

Receiving on one antenna and forwarding on multiple antennas.
Receiving on multiple antennas and forwarding on one antenna.
Receiving on multiple antennas and forwarding on multiple antennas.
Receiving on one antenna and forwarding on one antenna.

When receiving with multiple antennas in a relay, the received signals are separated in the relay. This can be achieved by using a weighting matrix $\mathbf{B_k}$, wherein the signals from each antenna together with the weighting process, produces as many parallel substantially interference free signal representations of the substreams, as are sent to the relay. If regenerative relaying is utilized, the signal representations of each substreams are decoded and subsequently encoded (e.g. including modulation and forward error correction as is well known in wireless communication) prior transmitting each substream on the orthogonal channels towards the receiver. If non-regenerative relaying is used, the substantially interference free signal representations of the substreams are simply sent on the orthogonal channels towards the receiver.

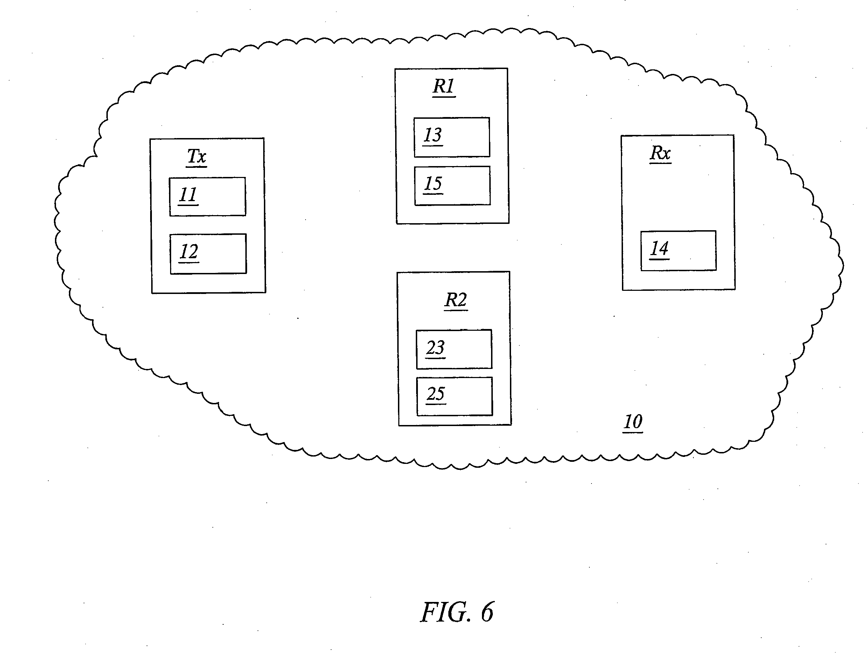

An embodiment of a system 10 enabling improved outer loop power control is illustrated in Fig. 6. The system 10 comprises a transmitting node Tx with multiple antennas, at least two relay nodes R1, R2 and a receiving node Rx.

Further, the system 10 comprises a partitioning unit 11 for partitioning the data stream into multiple data substreams, a beamforming unit 12 for beamforming and transmitting each substream over a first link to a respective of the relay nodes R, receiving units 13; 23 for receiving and forwarding representations of each substream over a second link to the receiving node Rx, a receiving unit 14 for receiving and multiplexing the representations to an output signal, and optional feedback units 15; 25 for providing channel state information (CSI) for the first and second links for each relay node R and the receiving node Rx to the transmitting node Tx.

In the illustrated embodiment the different means 10-15 are organized in a respective of the transmitting node Tx, the two relay nodes R1, R2 and the receiving node Rx. However, it is implied that some of the different means can be located at other nodes or implemented in one and the same node. It is likewise implied that the relay nodes can have multiple antennas, and that there can be provided multiple receiving nodes Rx.

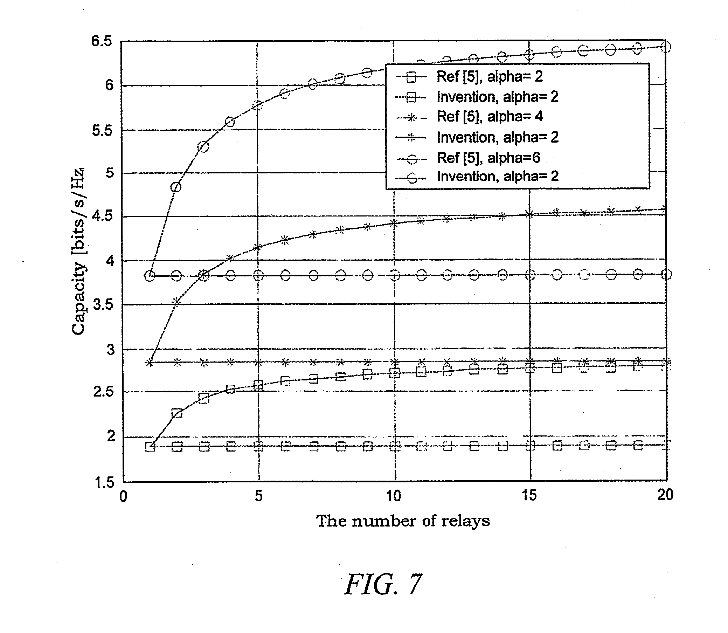

A comparison between prior art according to [6] and the invention is illustrated by the diagram in Fig. 7. The details of the comparison are further described in the Appendix. The diagram illustrates the channel capacity as a function of the number of relays in the system. As is clearly shown, the present invention provides a clear improvement over prior art.

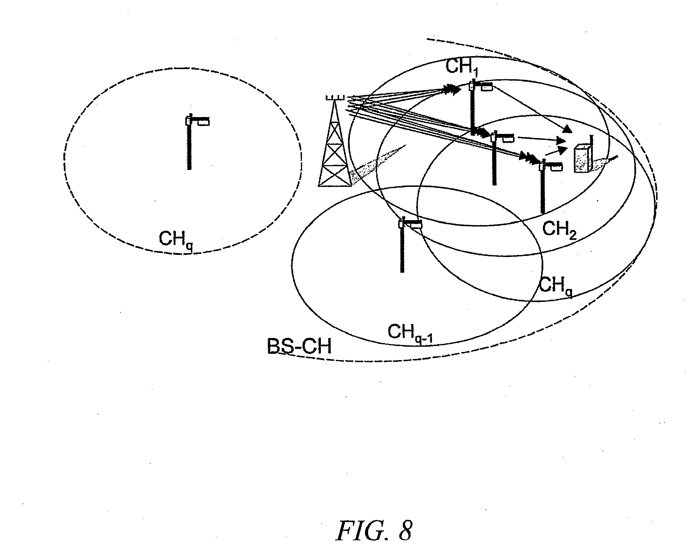

Fig. 8 illustrates how relay nodes can be spatially distributed in the system, here exemplarily attached to lamp poles. It is also shown how channel and transmit ranges are organized for various relay nodes. It is seen that relay coverage for the (substantially) orthogonal channels are overlapping. It is also shown that a channel can be reused multiple times within the same cell such as channel 'q' in Fig. 6. Channels may of course also be spatially reused between cells. The relays may be attached not just to lamp poles but also to houses, towers, etc.

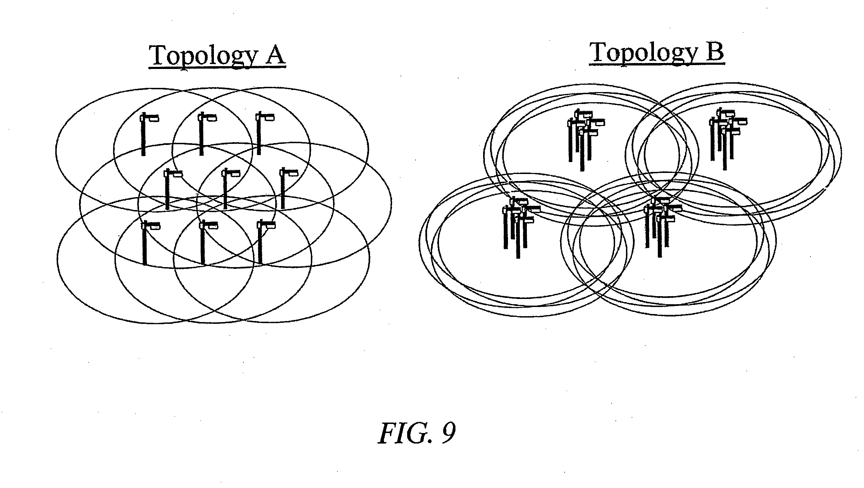

The overlapping coverage regions may also be organized in different ways as shown in Fig.9. A benefit for Topology A over Topology B is that the quality of a relay link will generally be better, thanks to the proximity of relays. Topology B however has the benefit that clusters of relays can be replaced with a single relay entity having the same number of antennas. Cables, optical fibres or even short-range wireless links, can then connect the antennas.

Although the present invention is described in the context of relaying, the receiver may in addition to one or more relayed substream receive a direct signal, representative of an additional substream, from the transmitter that does not pass via any relay. This direct signal is considered as one of the relayed substreams and hence multiplexed together with the other substreams in the receiver.

To summarize, advantages of the present invention include:

- High spectrum efficiency by spatial multiplexing.
- Low power consumption by efficiently allocating power between the transmitter and relays.
- Low power consumption by efficiently selecting one or more relays offering good communication conditions.
- Interference generation reduction by efficiently allocating power between the transmitter and relays. Reduced interference generation has a secondary benefit in that it can increase overall system capacity. (A problem for traditional MIMO is multiple access interference (MAI) from other cells. Thanks to that MAI is reduced, the benefits of MIMO can reveal itself to a greater extent.)
- Interference generation reduction by efficiently selecting one or more relays offering good communication conditions.

It will be understood by those skilled in the art that various modifications and changes may be made to the present invention without departure from the scope thereof, which is defined by the appended claims.

REFERENCES

[1] J. N. Laneman, "Cooperative Diversity in Wireless Networks: Algorithms and Architectures", Ph.D. Thesis, Massachusetts Institute of Technology, Cambridge, MA, August 2002.

[2] A. Goldsmith, S. A. Jafar, N. Jindal, S. Vishwanath, "Capacity Limits of MIMO", Channels", in IEEE Journal on Selected Areas in Communications, June 2003.

[3] Dohler Mischa (GB); Aghvami Abdol Hamid (GB); Said Fatin (GB); Ghorashi Seyed Ali (GB), patent W003003672, "Improvements in or Relating to Electronic Data Communication Systems", Priority date 28/6 2001.

[4] M. Dohler, J. Dominguez, H. Aghvami, "Link Capacity Analysis of Virtual Antenna Arrays" in Proceedings VTC Fall 2002, Vancouver, Canada, Sept. 2002.

[5] M. Dohler, A. Gkelias, H. Aghvami, "2-Hop Distributed MIMO Communication System", IEEE Electronics Letters, Vol. 39, No. 18, Sept. 2003, pp: 1350-1351.

[6] M. Dohler, A. Gkelias, H. Aghvami, "A Resource Allocation Strategy for Distributed MIMO Multi-Hop Communication Systems", IEEE Communications Letter, Vol. 8, No. 2, Feb. 2004, pp: 99 - 101.

[7] G. Ginis and J. M. Cioffi, "A multiuser precoding scheme achieving crosstalk cancellation with application to DSL systems", in Proc. 34th Asilomar Conf. Signals, Systems and Computers, vol. 2, 2000, pp.1627-1631.

APPENDIX: PERFORMANCE COMPARISON BETWEEN THE INVENTION AND DOHLER'S SCHEME

With all relays placed in the middle between the transmitter and receiver while they are all in a line, the distance from the transmitter to receiver is normalized to 1; the capacity for this invention scheme can be expressed

$$C_{Invention}^{(tot)} \approx \frac{B \cdot K}{K+1} \cdot \log_2 \left( 1 + \frac{P_{tot}}{\sigma_0^2} \cdot \frac{2^{\alpha-1}}{\frac{K}{K+1}} \right) \qquad (1)$$

where B is the total bandwidth, $K$ is the number of relays, $P_{tot}$ is the constraint power, a is the attenuation factor, $\sigma_0^2 = k_B \cdot T \cdot B$ is the noise power. The capacity for Dohler's scheme can be expressed

$$C_{Dohler}^{(tot)} \approx B \cdot \left[ \frac{1}{\log_2\left(1 + \left[2 - \frac{\beta_2}{\alpha_2}\right] \cdot 2^\alpha \cdot \frac{P_{tot}}{\sigma_0}\right)} + \frac{1}{\log_2\left(1 + \frac{\beta_2}{\alpha_2} \cdot 2^\alpha \cdot \frac{P_{tot}}{\sigma_0}\right)} \right]^{-1} \qquad (2)$$

$$\frac{\beta_2}{\alpha_2} \approx 2 \cdot \frac{\sqrt[3]{\frac{2^\alpha}{n_1}}}{\sqrt[3]{\frac{2^\alpha}{n_1}} + \sqrt[3]{\frac{2^\alpha}{n_2}}}$$

where $n_1$ and $n_2$ are respectively the number of transmitter antenna and relay. For Dohler's scheme, please refer to Equation (4) and (5) in [5].

For fair comparison between two schemes, $n_1 = n_2 = K$, thus Equation (2) becomes

$$C_{Dohler}^{(tot)} \approx \frac{B}{2} \cdot \log_2 \left( 1 + 2^\alpha \cdot \frac{P_{tot}}{\sigma_0^2} \right) \qquad (3)$$

Comparing Equation (3) with Equation (1), it can be seen that $C_{Dohler}^{(tot)}$ is independent on K, while, $C_{Invention}^{(tot)}$ is dependent on K. From Fig. 7, it can be see that there is visible gain for the invention over Dohler's scheme if $K > 1$.

**Claims**

1. A method for relaying deployment in a wireless communication system comprising a transmitting node with multiple antennas for communicating with at least one receiving node via at least two relay nodes, **characterized by:**

   partitioning (S1) a data stream at the transmitting node into at least two data substreams;
   beamforming and transmitting (S2) each said data substream over a first link to a respective one of said at least two relay nodes;
   forwarding (S3) at least one restorable representation of its received substream over a second link to the at least one receiving node from each of said at least two relay nodes; wherein each said relay node is configured to transmit said restorable representation over a respective orthogonal channel of said second link, and multiplexing (S4) the received restorable representations of each substream to form an output signal at said at least one receiving node corresponding to the data stream.

2. The method according to claim 1, **characterized by** providing (S5) channel state information for at least one of said first and second link related to each respective relay node at the transmitting node.

3. The method according to claim 2, **characterized in that** said channel state information for the second link comprises magnitude of amplitude gain.

4. The method according to claim 2, **characterized in that** said channel state information for the first link comprises phase information.

5. The method according to any of claims 2-4, **characterized by** providing (S5) said channel state information for both of said first and second link.

6. The method according to claims 2 and 4, **characterized by** adapting (S6) the weighting matrix for the transmitting node based on at least the received channel information for the first link for each said relay node.

7. The method according to claim 1, **characterized in that** at least one of said at least two relay nodes comprises multiple antennas.

8. The method according to claim 7, **characterized by** transmitting (S2) separate substreams to at least two of the multiple antennas of said at least one of said at least two relay nodes.

9. The method according to claim 7, **characterized by** transmitting (S2) equal or less number of substreams than the number of multiple antenna elements of said at least one of said at least two relay nodes, and separate substreams through weighting the received signals together.

10. The method according to claim 1, **characterized in that** said communication system comprises multiple receiving nodes.

11. The method according to claim 10, **characterized in that** at least one of said multiple receiving nodes comprise multiple antennas.

12. The method according to claim 5, **characterized by** allocating available transmit power among the transmitter antennas and the relays, based on the received channel state information for said first and second link.

13. The method according to claim 2, **characterized by** allocating available transmit power to the substreams and the at least two relay nodes, based on received channel state information for at least one of said first and second link.

14. The method according to claim 2, **characterized by** allocating data rates to each data substream based on the received channel state information for at least one of said first and second link.

15. The method according to claim 13 and 14, **characterized by** jointly allocating available transmit power to the substreams and said at least two relay node and data rates to each data substream.

16. The method according to claim 2, **characterized by** selecting at least one relay node that maximize an objective performance measure.

17. The method according to claim 16, **characterized by** said objective performance measure comprising a link performance measure according to one of throughput or channel capacity.

18. The method according to any combination of claims 12, 13, 14 and 16 **characterized by** jointly selecting and allocating any combination of; transmit power, data rates and relay nodes based on the received channel state information for at least one of said first and second link.

19. A wireless communication system (10) comprising at least one transmitting node (Tx) capable of communicating a data stream to at least one receiving node (Rx) via at least two relay nodes (R1; R2), **characterized by:**

    means (11) in the at least one transmitting node (Tx) for partitioning the data stream at the transmitter node into multiple data substreams;
    means (12) in the at least one transmitting node (Tx) for beamforming and transmitting each said data substream over a first link to a respective one of said at least two relay nodes (R1; R2); and
    means (13; 23) in each of the at least two relay nodes (R1; R2) for receiving and forwarding restorable representations of each said data substream over a second link to the receiving node (Rx); wherein each said relay node is configured to transmit said restorable representations over a respective orthogonal channel of said second link,
    means (14) in the at least one receiving node (Rx) for receiving and multiplexing said restorable representations of each said substream to an output signal corresponding to the transmission data stream.

20. The system (10) according to claim (19), **characterized by** further means (15; 25) for providing channel state information (CSI) regarding at least one of said first and second link for each respective relay node (R1; R2) and the receiving node (Rx) to the transmitting node (Tx).

21. The system according to claim 20, **characterized by** further means for adapting the antenna weight matrix based on the provided channel state information for said first link.

22. The system according to claim 20, **characterized by** means for allocating available transmit power among the substreams and the relays, based on the received channel state information for at least one of said first and second link.

23. The system according to claim 20, **characterized by** means for allocating data rates to each data substream based on the received channel state information.

24. The system according to claim 22 and 23, **characterized by** means for jointly allocating available transmit power to the multiple transmitter antennas and said at least two relay node and data rates to each data substream.

**Patentansprüche**

1. Verfahren für Relaying Deployment in einem drahtlosen Kommunikationssystem, aufweisend einen Vermittlungsknoten mit mehreren Antennen für ein Kommunizieren mit wenigstens einem Empfangsknoten über wenigstens zwei Relayknoten, **gekennzeichnet durch**:

    Partitionierung (S1) eines Datenstroms am Vermittlungsknoten in wenigstens zwei Datensubströme;
    Beamforming und Übertragen (S2) jedes der Datensubströme über eine erste Verknüpfung an jeweils einen der wenigstens zwei Relayknoten;
    Weiterschaltung (S3) von wenigstens einer wiederherstellbaren Darstellung von dessen empfangenen Substrom über eine zweite Verknüpfung an den wenigstens einen Empfangsknoten von jedem der wenigstens zwei Relayknoten, wobei jeder Relayknoten für ein Übertragen der wiederherstellbaren Darstellung über einen jeweiligen orthogonalen Kanal der zweiten Verknüpfung, und
    Multiplexen (S4) der empfangenen wiederherstellbaren Darstellungen jedes Substroms zur Bildung eines Ausgangssignals an wenigstens einem Empfangsknoten entsprechend dem Datenstrom.

2. Verfahren nach Anspruch 1, **gekennzeichnet durch** ein Bereitstellen (S5) von Kanalstatusinformation für wenigstens eine der ersten und zweiten Verknüpfungen, dies sich auf den jeweiligen Relayknoten am Vermittlungsknoten beziehen.

3. Verfahren nach Anspruch 2, **dadurch gekennzeichnet, dass** die Kanalstatusinformation für die zweite Verknüpfung die Größe der Amplitudenverstärkung aufweist.

4. Verfahren nach Anspruch 2, **dadurch gekennzeichnet, dass** die Kanalstatusinformation für die erste Verknüpfung eine Phaseninformation aufweist.

5. Verfahren nach einem der Ansprüche 2 bis 4, **gekennzeichnet durch** ein Bereitstellen (S5) der Kanalstatusinformation für sowohl die erste als auch die zweite Verknüpfung.

6. Verfahren nach Anspruch 2 und 4, **gekennzeichnet durch** ein Anpassen (S6) der Gewichtungsmatrix für den Vermittlungsknoten auf Basis von wenigstens der empfangenen Kanalinformation für die erste Verknüpfung für jeden der Relayknoten.

7. Verfahren nach Anspruch 1, **dadurch gekennzeichnet, dass** wenigstens einer der wenigstens zwei Relayknoten mehrere Antennen aufweist.

8. Verfahren nach Anspruch 7, **gekennzeichnet durch** ein Übertragen (S2) separater Subströme an wenigstens zwei der mehreren Antennen des wenigstens einen der wenigstens zwei Relayknoten.

9. Verfahren nach Anspruch 7, **gekennzeichnet durch** Übertragen (S2) von einer gleichen oder geringeren Anzahl von Subströmen als die Anzahl der mehreren Antennenelemente der wenigstens einen der wenigstens zwei Relayknoten, und Separieren der Subströme **durch** Gewichten der empfangenen Signale zusammen.

10. Verfahren nach Anspruch 1, **dadurch gekennzeichnet, dass** das Kommunikationssystem mehrere Empfangsknoten aufweist.

11. Verfahren nach Anspruch 10, **dadurch gekennzeichnet, dass** wenigstens einer der mehreren Empfangsknoten mehrere Antennen aufweist.

12. Verfahren nach Anspruch 5, **gekennzeichnet durch** ein Zuteilen verfügbarer Übertragungsleistung unter den Senderantennen und den Relays auf Basis der empfangenen Kanalstatusinformation für die erste und zweite Verknüpfung.

13. Verfahren nach Anspruch 2, **gekennzeichnet durch** ein Zuteilen verfügbarer Übertragungsleistung die Subströme und die wenigstens zwei Relayknoten auf Basis der empfangenen Kanalstatusinformation für wenigstens die erste und zweite Verknüpfung.

14. Verfahren nach Anspruch 2, **gekennzeichnet durch** ein Zuteilen von Datenraten an jeden Datensubstrom auf Basis der empfangenen Kanalstatusinformation für wenigstens die erste und zweite Verknüpfung.

15. Verfahren nach Anspruch 13 und 14, **gekennzeichnet durch** ein gemeinsames Zuteile von verfügbarer Übertragungsleistung an die Subströme und die wenigstens zwei Relayknoten und Datenraten an jeden Datensubstrom.

16. Verfahren nach Anspruch 2, **gekennzeichnet durch** Auswählen von wenigstens einem Relayknoten, der ein objektives Leistungsmaß maximiert

17. Verfahren nach Anspruch 16, **gekennzeichnet dadurch, dass** das objektive Leistungsmaß ein Verknüpfungsleistungsmaß entsprechend einem von Durchsatz oder Kanalkapazität.

18. Verfahren nach einer beliebigen Kombination der Ansprüche 12, 13, 14 und 16, **gekennzeichnet durch** gemeinsames Auswählen und Zuteilen einer beliebigen Kombination von: Übertragungsleistung, Datenraten und Relayknoten auf Basis der empfangenen Kanalstatusinformation für wenigstens ein der ersten und zweiten Verknüpfung.

19. Drahtloses Kommunikationssystem (10), aufweisend wenigstens einen Vermittlungsknoten (Tx) mit der Fähigkeit zum Kommunizieren eines Datenstroms an wenigstens einen Empfangsknoten (Rx) über wenigstens zwei Relayknoten (R1; R2), **gekennzeichnet durch**:

Mittel (11) in dem wenigstens einen Vermittlungsknoten (Tx) für ein Partitionieren des Datenstroms am Vermittlungsknoten in mehrere Datensubströme;

Mittel (12) in dem wenigstens einen Vermittlungsknoten (Tx) für ein Beamforming und Übertragen jedes der Datensubströme über eine erste Verknüpfung an jeweils einen der wenigstens zwei Relayknoten (R1; R2); und

Mittel (13; 23) in jedem der zwei Relayknoten (R1; R2) für einen Empfang und ein Weiterleiten wiederherstellbarer Darstellungen von jedem der Datensubströme über eine zweite Verknüpfung an den Empfangsknoten (Rx);

wobei jeder Relayknoten für ein Übertragen der wiederherstellbaren Darstellungen über jeweils einen orthogonalen Kanal der zweiten Verknüpfung konfiguriert ist,

Mittel (14) in dem wenigstens einen Empfangsknoten (Rx) für ein Empfangen und Multiplexen der wiederherstellbaren Darstellungen jedes Substroms an ein Ausgangssignal entsprechend dem Übertragungsdatenstrom.

20. System nach Anspruch 19, **gekennzeichnet durch** weitere Mittel (15; 25) für ein Bereitstellen von Kanalstatusinformation (CSI) betreffend wenigstens eine der ersten und zweiten Verknüpfung für den jeweiligen Relayknoten (R1; R2) und den Empfangsknoten (Rx) an den Vermittlungsknoten (Tx).

21. System nach Anspruch 20, **gekennzeichnet durch** weitere Mittel für ein Anpassen der Antennen-Gewichtungsmatrix auf Basis der bereitgestellten Kanalstatusinformation für die erste Verknüpfung.

22. System nach Anspruch 20, **gekennzeichnet durch** Mittel für ein Zuteilen verfügbarer Übertragungsleistung unter den Subströmen und den Relays auf Basis der empfangenen Kanalstatusinformation für die wenigstens eine der ersten und zweiten Verknüpfung.

23. System nach Anspruch 20, **gekennzeichnet durch** Mittel für ein Zuteilen von Datenraten an jeden Datensubstrom auf Basis der empfangenen Kanalstatusinformation.

24. System nach Anspruch 22 und 23, **gekennzeichnet durch** Mittel für ein gemeinsames Zuteilen verfügbarer Übertragungsleistung an die mehreren Übertragungsantennen und die wenigstens zwei Relayknoten und Datenraten an jeden Datensubstrom.


**Revendications**

1. Procédé pour un déploiement de relais dans un système de communication sans fil comprenant un noeud de transmission avec des antennes multiples pour communiquer avec au moins un noeud de réception par l'intermédiaire d'au moins deux noeuds de relais, **caractérisé par** le fait :

de partitionner (S1) un flux de données au niveau du noeud de transmission en au moins deux sous-flux de données ;

de mettre en forme de faisceau et de transmettre (S2) chacun desdits sous-flux de données sur une première liaison à un noeud respectif desdits au moins deux noeuds de relais ;

de transférer (S3) au moins une représentation pouvant être restaurée de son sous-flux reçu sur une deuxième liaison à l'au moins un noeud de réception à partir de chacun desdits au moins deux noeuds de relais ; chacun desdits noeud de relais étant configuré pour transmettre ladite représentation pouvant être restaurée sur un canal orthogonal respectif de ladite deuxième liaison, et

de multiplexer (S4) les représentations pouvant être restaurées reçues de chaque sous-flux pour former un signal de sortie au niveau dudit au moins un noeud de réception correspondant au flux de données.

2. Procédé selon la revendication 1, **caractérisé par** le fait de fournir (S5) des informations d'état de canal pour au moins l'une desdites première et deuxième liaisons correspondant à chaque noeud de relais respectif au niveau du noeud de transmission.

3. Procédé selon la revendication 2, **caractérisé en ce que** lesdites informations d'état de canal pour la deuxième liaison comprennent une grandeur de gain d'amplitude.

4. Procédé selon la revendication 2, **caractérisé en ce que** lesdites informations d'état de canal pour la première liaison comprennent des informations de phase.

5. Procédé selon l'une des revendications 2 à 4, **caractérisé par** le fait de fournir (S5) lesdites informations d'état de canal à la fois auxdites première et deuxième liaisons.

6. Procédé selon les revendications 2 et 4, **caractérisé par** le fait d'adapter (S6) la matrice de pondération pour le noeud de transmission sur la base d'au moins les informations de canal reçues pour la première liaison pour chacun desdits noeuds de relais.

7. Procédé selon la revendication 1, **caractérisé en ce qu'**au moins l'un desdits au moins deux noeuds de relais comprend des antennes multiples.

8. Procédé selon la revendication 7, **caractérisé par** le fait de transmettre (S2) des sous-flux séparés à au moins deux antennes parmi les multiples antennes dudit au moins un desdits au moins deux noeuds de relais.

9. Procédé selon la revendication 7, **caractérisé par** le fait de transmettre (S2) un nombre de sous-flux inférieur ou égal au nombre d'éléments d'antennes multiples dudit au moins un desdits au moins deux noeuds de relais, et des sous-flux séparés en pondérant les signaux reçus ensemble.

10. Procédé selon la revendication 1, **caractérisé en ce que** ledit système de communication comprend de multiples noeuds de réception.

11. Procédé selon la revendication 10, **caractérisé en ce qu'**au moins l'un desdits noeuds de réception multiples comprend des antennes multiples.

12. Procédé selon la revendication 5, **caractérisé par** le fait d'allouer une puissance de transmission disponible entre les antennes de transmission et les relais, sur la base des informations d'état de canal reçues pour lesdites première et deuxième liaisons.

13. Procédé selon la revendication 2, **caractérisé par** le fait d'allouer une puissance de transmission disponible aux sous-flux et aux au moins deux noeuds de relais, sur la base d'informations d'état de canal reçues pour au moins l'une desdites première et deuxième liaisons.

14. Procédé selon la revendication 2, **caractérisé par** le fait d'allouer des taux de transfert de données à chaque sous-flux de données sur la base des informations d'état de canal reçues pour au moins l'une desdites première et deuxième liaisons.

15. Procédé selon la revendication 13 et 14, **caractérisé par** le fait d'allouer conjointement une puissance de transmission disponible aux sous-flux et auxdits au moins deux noeuds de relais et des taux de transfert de données à chaque sous-flux de données.

16. Procédé selon la revendication 2, **caractérisé par** le fait de sélectionner au moins un noeud de relais qui maximise une mesure de performance objective.

17. Procédé selon la revendication 16, **caractérisé par** ladite mesure de performance objective comprenant une mesure de performance de liaison selon l'un parmi un débit ou une capacité de canal.

18. Procédé selon l'une des combinaisons des revendications 12, 13, 14 et 16, **caractérisé par** le fait de sélectionner et d'allouer conjointement une combinaison quelconque parmi : une puissance de transmission, des taux de transfert de données et des noeuds de relais sur la base des informations d'état de canal reçues pour au moins l'une desdites première et deuxième liaisons.

19. Système de communication sans fil (10) comprenant au moins un noeud de transmission (Tx) conçu pour communiquer un flux de données à au moins un noeud de réception (Rx) par l'intermédiaire d'au moins deux noeuds de relais (R1 ; R2), **caractérisé par** :

   un moyen (11) dans l'au moins un noeud de transmission (Tx) destiné à partitionner le flux de données au niveau du noeud de transmission en sous-flux de données multiples ;
   un moyen (12) dans l'au moins un noeud de transmission (Tx) destiné à mettre en forme de faisceau et à transmettre chacun desdits sous-flux de données sur une première liaison à un noeud respectif desdits au moins deux noeuds de relais (R1 ; R2) ; et

des moyens (13 ; 23) dans chacun des au moins deux noeuds de relais (R1 ; R2) destinés à recevoir et à transférer des représentations pouvant être restaurées de chacun desdits sous-flux de données sur une deuxième liaison au noeud de réception (Rx) ;

dans lequel chacun desdits noeuds de relais est configuré pour transmettre lesdites représentations pouvant être restaurées sur un canal orthogonal respectif de ladite deuxième liaison,

un moyen (14) dans l'au moins un noeud de réception (Rx) destiné à recevoir et à multiplexer lesdites représentations pouvant être restaurées de chacun desdits sous-flux en un signal de sortie correspondant au flux de données de transmission.

**20.** Système (10) selon la revendication 19, **caractérisé par** d'autres moyens (15 ; 25) destinés à fournir des informations d'état de canal (CSI) concernant au moins l'une desdites première et deuxième liaisons pour chaque noeud de relais respectif (R1 ; R2) et le noeud de réception (Rx) au noeud de transmission (Tx).

**21.** Système selon la revendication 20, **caractérisé par** un autre moyen destiné à adapter la matrice de pondération d'antenne sur la base des informations d'état de canal fournies pour ladite première liaison.

**22.** Système selon la revendication 20, **caractérisé par** un moyen destiné à allouer une puissance de transmission disponible entre les sous-flux et les relais, sur la base des informations d'état de canal reçues pour au moins l'une desdites première et deuxième liaisons.

**23.** Système selon la revendication 20, **caractérisé par** un moyen destiné à allouer des taux de transfert de données à chaque sous-flux de données sur la base des informations d'état de canal reçues.

**24.** Système selon la revendication 22 et 23, **caractérisé par** un moyen destiné à allouer conjointement une puissance de transmission disponible aux multiples antennes de transmission et auxdits au moins deux noeuds de relais et des taux de transfert de données à chaque sous-flux de données.

*FIG. 1*

FIG. 2

*FIG. 3*

EP 1 854 235 B1

FIG. 4

FIG. 5

*FIG. 6*

FIG. 7

*FIG. 8*

Topology A       Topology B

*FIG. 9*

EP 1 854 235 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03003672 A, Dohler Mischa (GB); Aghvami Abdol Hamid (GB); Said Fatin (GB); Ghorashi Seyed Ali (GB)

**Non-patent literature cited in the description**

- **ZHANG J. et al.** Optimal Power Allocation for Multiple-Input-Multiple-Output Relaying system. *IEEE 60th Vehicular Technology Conference, 2004 VTC 2004-FALL, 2004,* 26 September 2004, vol. 2, 1405-1409
- **J. N. LANEMAN.** Cooperative Diversity in Wireless Networks: Algorithms and Architectures. *Ph.D. Thesis, Massachusetts Institute of Technology,* August 2002
- **A. GOLDSMITH ; S. A. JAFAR ; N. JINDAL ; S. VISHWANATH.** Capacity Limits of MIMO'', Channels. *IEEE Journal on Selected Areas in Communications,* June 2003
- **M. DOHLER ; J. DOMINGUEZ ; H. AGHVAMI.** Link Capacity Analysis of Virtual Antenna Arrays. *Proceedings VTC Fall 2002,* September 2002
- **M. DOHLER ; A. GKELIAS ; H. AGHVAMI.** 2-Hop Distributed MIMO Communication System. *IEEE Electronics Letters,* September 2003, vol. 39 (18), 1350-1351
- **M. DOHLER ; A. GKELIAS ; H. AGHVAMI.** A Resource Allocation Strategy for Distributed MIMO Multi-Hop Communication Systems. *IEEE Communications Letter,* February 2004, vol. 8 (2), 99-101
- **G. GINIS ; J. M. CIOFFI.** A multiuser precoding scheme achieving crosstalk cancellation with application to DSL systems. *Proc. 34th Asilomar Conf. Signals, Systems and Computers,* 2000, vol. 2, 1627-1631